# EUROPÄISCHE PATENTSCHRIFT

(11) **EP 1 679 955 B1**
(45) Veröffentlichungstag und Bekanntmachung des Hinweises auf die Patenterteilung: **13.01.2016**
(21) Anmeldenummer: 04797617.0
(22) Anmeldetag: 04.11.2004
(51) Int. Cl.: A01J 5/007, A01J 5/017

(54) **VORRICHTUNG UND VERFAHREN ZUM AUTOMATISCHEN STARTEN EINES MELKVORGANGS**
DEVICE AND METHOD FOR AUTOMATICALLY STARTING A MILKING PROCESS
DISPOSITIF ET PROCÉDÉ POUR LE DÉMARRAGE AUTOMATIQUE D'UN PROCESSUS DE TRAITE

(30) Priorität: 04.11.2003 DE 10352155
(43) Veröffentlichungstag der Anmeldung: 19.07.2006
(73) Patentinhaber: GEA WestfaliaSurge GmbH, 59199 Bönen (DE)
(72) Erfinder: STOLTE, Friedrich, 33790 Halle (DE); KRONE, Otto, 49479 Laggenbeck (DE); SUHR, Olaf, 59302 Oelde (DE)
(74) Vertreter: BSB Intellectual Property Law
(86) Internationale Anmeldenummer: PCT/EP2004/012492
(87) Internationale Veröffentlichungsnummer: WO 2005/043985

(56) Entgegenhaltungen:
- DE-A1- 2 554 998
- DE-C1- 4 438 236
- DE-U1- 8 707 855
- US-A- 3 861 355

## Beschreibung

Die Erfindung betrifft eine Vorrichtung gemäß dem Oberbegriff von Anspruch 1. Die vorliegende Erfindung betrifft zudem ein Verfahren zum automatischen Starten eines Melkvorgangs.

Im Stand der Technik ist aus der DE 25 54 998 C2 eine Vorrichtung und ein Verfahren bekannt, bei der ein automatischer Startvorgang erfolgt. Bei diesem bekannten System liegt der Abnahmezylinder im Wesentlichen in der Senkrechten und ist am oberen Ende verschwenkbar befestigt. Nach dem Greifen des Melkzeuges wird durch die Bewegung des Melkzeuges zum Tier hin der verschwenkbare Abnahmezylinder aus der senkrechten Richtung ausgelenkt. Durch das Auslenken des Abnahmezylinders wird ein Schalter frei gegeben, der das Startsignal für den Melkvorgang erzeugt. Das Seil wird freigegeben. Nach erfolgtem Ansetzen begibt sich der Zylinder - durch die Schwerkraft bedingt - wieder in die senkrechte Lage, wo er bis zum Melkende verbleibt. Nach dem Abnahmesignal wird der Zylinder gespannt, wodurch er wieder eine schräge Haltung einnimmt. Das Melkzeug wird abgenommen und der Zylinder mit dem daran hängenden Melkzeug pendelt aus. Diese Pendelbewegung des Zylinders und des Melkzeuges erfolgt in dem Arbeitsbereich des Melkers, der davon erheblich belästigt werden kann.

Nachteilig an dem bekannten Stand der Technik ist, dass zum Starten eine erhebliche Verschwenkung des Abnahmezylinders erfolgen muss. Außerdem pendelt der Abnahmezylinder nach Ende des Melkvorganges aus und kann den Melker bei seiner Arbeit behindern.

Weiterhin wird in DE 25 54 998 ein Stand der Technik als bekannt beschrieben dem der Oberbegriff von Anspruch 1 entspricht.

Es ist deshalb die Aufgabe der vorliegenden Erfindung, eine Vorrichtung und ein Verfahren zur Verfügung zu stellen, bei dem der Startvorgang einfacher ist.

Ein Aspekt ist, dass der Startvorgang einfacher ausgelöst werden kann. Ein weiterer Aspekt ist, dass das Melkzeug nach dem Startsignal schneller und mit geringerem Kraftaufwand von dem Melker zu dem Tier bewegt werden kann. Außerdem ist ein Aspekt, dass ein Auspendeln des Abnahmezylinders unterbleiben kann.

Diese Aufgabe wird mit den Merkmalen des Anspruches 1 und des Anspruchs 22 gelöst.

Die erfindungsgemäße Vorrichtung nach Anspruch 1 umfasst einen Melkzeugzylinder, der z.B. als Melkzeugabnahmezylinder bzw. Abnahmezylinder ausgeführt sein kann. Ein flexibles Element ist vorgesehen, um das Melkzeug anzuschließen, wobei das flexible Element als Seil, Kette oder dergleichen ausgeführt sein kann. Wenigstens ein Sensorelement ist vorgesehen. Weiterhin umfasst der Melkzylinder wenigstens ein Schnellbelüftungsventil, welches wenigstens in eine Öffnungsstellung und in eine Verschlussstellung bringbar ist. Zudem erfasst das Sensorelement wenigstens eine wesentliche Gewichtsentlastung des flexiblen Elements, um ein Startsignal für einen Melkvorgang auszulösen.

Die Erfindung hat viele Vorteile.

Erfindungsgemäß ist ein separater Schaltknopf nicht nötig. Damit kann z.B. das "Übergreifen" bei doppelseitigen Fischgrätenmelkständen unterbleiben. Ein weiterer Vorteil ist, dass der Melker durch Greifen und Halten oder Anheben des Melkzeuges den Melkvorgang starten kann. Damit wird eine durchgängigere und schnellere Arbeitsweise des Melkers ermöglicht.

Vorzugsweise wird ein Startsignal ausgegeben, wenn die Gewichtsentlastung des flexiblen Elements einen vorbestimmten Schwellwert überschreitet. Besonders bevorzugt ist der vorbestimmte Schwellwert unabhängig von den Betriebsbedingungen des Melkzeugzylinders und der Melkanlage, an der der Melkzeugzylinder betrieben wird. Insbesondere ist der Schwellwert unabhängig von dem Betriebsvakuum des Melkzeugzylinders.

Der vorbestimmte Schwellwert ist vorzugsweise veränderbar und kann kontinuierlich oder in diskreten Schritten einstellbar oder veränderbar sein.

Vorzugsweise ist wenigstens ein Vorbelastungselement vorgesehen, wobei der vorbestimmte Schwellwert durch das Vorbelastungselement beeinflussbar sein kann. Vorzugsweise ist die Vorspannkraft des Vorbelastungselements der Gewichtskraft des flexiblen Elementes entgegengerichtet. Vorzugsweise wird ein Startsignal ausgelöst, wenn die Gewichtsentlastung des flexiblen Elementes die Vorspannkraft des Vorbelastungselements übersteigt.

Insbesondere bei einer solchen Ausgestaltung ist der Schaltpunkt unabhängig von den Betriebsbedingungen der Melkanlage oder des Melkzeugzylinders, denn wenn die resultierende Gewichtskraft des Melkzeuges entsprechend gering geworden ist und die Vorbelastungskraft des Vorbelastungselements überwunden ist, wird das Startsignal ausgegeben.

In anderen Ausgestaltungen ist es auch möglich, dass eine Kraft nicht mittels eines Vorbelastungelements ausgeübt wird, sondern, dass die Kraft als z.B. Saugkraft auf einen Kolben, bei deren Überwindung das Startsignal ausgegeben wird. Nachteilig an dieser Variante ist allerdings, dass die Höhe der Saugkraft von dem aktuellen Betriebsvakuum der Anlage abhängt, da eine separate Vakuumversorgung für diesen Anwendungsfall zu aufwändig ist. Deshalb wird bei einer solchen Lösung der Schaltpunkt und die Ausgabe des Startsignals abhängig von den aktuellen Betriebsbedingungen. Eine Anpassung auf unterschiedliche Melkzeuggewichte ist nur durch Veränderung der wirkenden Flächen möglich. Eine mögliche Vergrößerung der wirksamen Fläche ist aber in vielen Fällen durch die vorliegenden Abmessungen begrenzt.

Ein weiterer Nachteil bei Verwendung von Saugkraft auf einen Kolben zur Erzeugung einer Vorspannkraft ist, dass der Kolben im Grenzbereich Vakuum/Atmosphäre arbeitet und die Führung des Kolbens entsprechend genau sein muss, um große Leckageverluste zu vermeiden. Da sich auf der einen Seite des Kolbens der Melkbereich mit atmosphärischer Luft und auf der anderen Seite Vakuum befindet, kann verschmutzte Luft in den Raum unterhalb des Kolbens bzw. in den Bereich des Sensorelementes angesaugt werden. Dadurch kann es zu einer Verschmutzung der dichtenden Fläche zwischen Führung und Kolben kommen, wodurch eine höhere Reibung und ein Blockieren des Kolbens auftreten kann.

Wenn hingegen das zuvor beschriebene separate Vorbelastungselement zur Erzeugung einer konstanten Vorbelastungskraft verwendet wird, sind alle zum Schalten verwendeten Teile immer in Luft von atmosphärischem Druck angeordnet. Da kein Druckunterschied vorliegt, wird keine verschmutzte Luft angesaugt und es ist eine separate Dichtung nicht erforderlich.

Vorzugsweise ist das flexible Element mit einem Kolben des Melkzeugzylinders verbunden.

Das Sensorselement kann einen Näherungssensor oder -schalter, einen Magnetgrenzsensor oder -schalter, einen Reedkontaktsensor oder -schalter oder einen Dehnungsmessstreifen, einen piezoelektrischen Sensor oder einen Gewichtssensor oder auch mehrere gleiche oder unterschiedliche der genannten Sensoren und dergleichen mehr umfassen, wobei das Sensorelement vorzugsweise berührungslos arbeitet.

Vorzugsweise ist wenigstens ein Teil des Sensors innerhalb des Zylinders angeordnet.

Wird das Melkzeug von dem Melker genommen und gehalten, so wird das Seil von der Gewichtskraft des Melkzeugs entlastet. Das Sensorselement kann diese Entlastung registrieren und gibt das Startsignal aus, wenn der Schwellwert überschritten ist.

In einer bevorzugten Weiterbildung umfasst das Vorbelastungselement wenigstens ein Federelement, welches auf das flexible Element einwirkt und z.B. als Seil oder Kette ausgeführt ist. Vorzugsweise wirkt das Vorbelastungselement auf ein im Melkzeugzylinder angeordnetes bewegliches Element ein, z.B. auf eine Innenhülse, einen Kolben oder einen Hebel, der an dem flexiblen Element befestigt ist. Das Vorbelastungselement bewirkt eine Vorspannung. Diese ist primär ein Ausgleich für die Gewichtskraft und Reibkraft des flexiblen Elementes bzw. Seiles und der Hülse und weiterer Komponenten. Wird das flexible Element (z.B. Seil) von dem Gewicht des Melkzeuges entlastet, so kann das Vorbelastungselement eine Verschiebung des flexiblen Elementes an dem oder in dem Melkzeugzylinder bewirken. Die Verschiebung wird durch das Sensorselement registriert und es wird das Startsignal gegeben.

Ein Vorbelastungselement mit einem Federelement hat viele Vorteile. Durch den Einsatz von Federelementen unterschiedlicher Federsteifigkeiten kann die Auslösekraft eingestellt werden. Dazu kann das Vorbelastungselement austauschbar sein. Mittels entsprechender Federelemente kann die Vorbelastung einfach an unterschiedliche Melkzeuggewichte angepasst werden. Alternativ kann die wirksame Federkraft eines Federelements eingestellt werden, indem eine einstellbare Vorspannung auf das Federelement aufgebracht wird.

Da in der Regel nur ein kleiner Hub vorliegt, unterliegt das Federelement bei entsprechender Auslegung praktisch keiner Materialermüdung. Bei Verwendung eines Federelements als Vorbelastungselement werden insgesamt nur wenige Teile benötigt. Anstelle eines Federelements kann als Vorbelastungselement auch ein Gewicht oder ein elektrisches oder magnetisches Kraftelement eingesetzt werden.

Es ist möglich, für unterschiedliche Tierrassen oder Tierarten die gleiche erfindungsgemäße Vorrichtung zu verwenden. Da die Melkzeuge für Kühe, Kamele, Schafe und z.B. Ziegen jeweils ein erheblich unterschiedliches Gewicht aufweisen, kann durch die Justierung zw. durch den Austausch des Vorbelastungselementes die Vorrichtung auf den Einsatz bei bestimmten Melkzeugen angepasst werden. Über die Stärke der Kraft des beweglichen Elementes (Feder, Gewicht etc.) kann die Empfindlichkeit des Schaltens angepasst werden. Bei Verwendung von Federelementen wird deshalb bei leichten Melkzeugen vorzugsweise ein weicheres Federelement und bei schweren Melkzeugen ein härteres Federelement eingesetzt.

Wird hingegen eine andere Art von Vorbelastungselement genommen, bei der ein Gewichtsausgleich nicht derart einfach ist, kann die Vorrichtung gegebenenfalls nicht derart flexibel verwendet werden. Beispielsweise kann ein Vorbelastungselement auch über ein Steuervakuum in einem Steuerraum realisiert werden. Bei einer gegebenen Fläche, auf die das Steuervakuum einwirkt, liegt die wirkende Kraft fest. Damit besteht dann bei leichten Melkzeugen eine größere Gefahr, dass unbeabsichtigt Startsignale ausgelöst werden.

Das gilt insbesondere wenn das flexible Element oder das Seil zum Melkzeug mehrfach umgelenkt wird. Die Reibungsverluste an den Umlenkstellen bewirken eine größere Schaltunsicherheit Das kann zwar durch eine entsprechend hohe Vorbelastungskraft des Vorbelastungselementes ausgeglichen werden, aber dann kann es insbesondere bei leichteren Melkzeugen zum ungewollten Auslösen kommen, da die Gewichtskraft des Melkzeuges und die Vorbelastungskraft sich angleichen.

Anstatt eines Vorbelastungselementes oder zusätzlich dazu kann als Sensor ein Gewichtssensor oder ein Dehnungsmesseinrichtung wie z.B. ein Dehnungsmessstreifen oder dergleichen verwendet werden. Bei einer Dehnungsmesseinrichtung kann in der Steuereinrichtung ein Schwellwert eingestellt werden, ab der ein Startsignal ausgelöst wird. Das kann per Handregler oder per Software erfolgen. Dann ist die erfindungsgemäße Vorrichtung ohne Umbau für den Einsatz unter unterschiedlichen Bedingungen geeignet.

Vorzugsweise erfolgt nach dem Startsignal wenigstens das Öffnen des Melkvakuums. Auch ein Start der Pulsation kann erfolgen. Bei einer Steuerungseinrichtung kann die Milchflussüberwachung gestartet werden.

Im Stand der Technik registriert hingegen ein Lagesensor das Verschwenken des Abnahmezylinders. Mit einer derartigen Vorrichtung ist eine erhebliche Bewegung des Melkzeuges nötig, um ein Startsignal auszulösen. Erst nach erfolgtem Startsignal wird der Melkzeugzylinder belüftet. Deshalb ist bis dahin die Bewegung des Melkzeuges gegenüber dem Zylinder behindert, da das Melkzeug gegen das Vakuum im Zylinder herausgezogen werden muß.

Die erfindungsgemäße Vorrichtung gibt hingegen schon nach Gewichtsentlastung bzw. nach kurzem Anheben des Melkzeuges das Startsignal, so dass der Melkzeugzylinder frühzeitig belüftet wird, wodurch das Herausziehen möglich ist.

Vorzugsweise ist der Melkzeugzylinder, der als Trag- und Abziehzylinder ausgeführt sein kann, waagerecht angeordnet und vorzugsweise starr befestigt. Dadurch wird der Arbeitsbereich vergrößert. Es ist auch möglich einen senkrechten Zylinder einzusetzen, der dann ebenfalls in der Regel fest montiert ist. Die hier vorgeschlagene Startmethode ist unabhängig von der Lage des Zylinders und funktioniert sowohl bei waagerechten als auch bei senkrecht angeordneten Zylindern.

Bei modernen Anlagen kann eine Vielzahl an Informationen an dem Anzeige- und Steuergerät eingegeben und abgerufen werden. Nach einer Bedienphilosophie soll deshalb das Anzeige- und Steuergerät für die aktuelle Kuh immer im Sichtbereich des Melkers angeordnet werden.

Gerade gegen Ende des Melkvorgangs sollte der Melker das Euter im Blickfeld haben, da ein guter und erfahrener Melker an Hand des Zustandes des Euters erkennen kann, ob dieses ausgemolken ist oder nicht. Der Melker fühlt auch durch Abtasten der Euterviertel bzw. durch Nachmelken ob noch im erheblichen Umfang Milch im Euter vorhanden ist oder nicht. Weiterhin sollte der Melker aber auch das Anzeige- und Steuergerät bzw. die grafische Bedieneinheit im Blickfeld haben, da viele Informationen ausgegeben werden, wie beispielsweise die aktuell ermolkene Milchmenge gegenüber der erwartenden Milchmenge, die Leitwertanzeige und weitere Informationen mehr. Sind sowohl Euter und auch Anzeigeund Steuergerät gleichzeitig im Blickfeld, so ist die Anordnung und der Aufbau des Melkstandes deshalb besonders vorteilhaft.

Ein erheblicher Vorteil einer erfindungsgemäßen Startautomatik ist, dass z.B. bei spiegelbildlich aufgebauten Anlagen kein "Übergreifen" der Hände nötig ist. So ist z. B. bei einem doppeltseitigem Fischgrätenmelkstand die eine Hälfte der Melkplätze spiegelbildlich zur der anderen Hälfte angeordnet. Das führt dazu, dass der Melker auf der einen Seite das jeweils nächste Tier beispielsweise auf der rechten Seite von sich hat, während es sich auf der anderen Melkstandseite auf der vom Melker aus gesehenen linken Seite befindet. Wird nun ein konventioneller Startknopf auf der jeweils rechten Seite angeordnet, so wird bei einer Hälfte der Melkplätze eines solchen Fischgrätenmelkstandes (FGM-Melkstand) die gleichzeitige visuelle Kontrolle der grafischen Anzeige und des Euters erschwert. Wird hingegen der Startknopf auf die andere (linke) Seite platziert, so wird der Startvorgang für den Melker schwieriger da er z. B. mit der linken Hand das Melkgeschirr hält, während er mit der rechten Hand über die linke Hand hinweg greifen muss, um den Startknopf zu drücken. Der Melker muss dort mit der rechten Hand über die linke greifen, um den Melkvorgang zu starten.

Durch eine Startautomatik werden diese Nachteile überwunden, da ein Startknopf nicht mehr nötig ist. Die Anzeige kann immer in der Nähe des Euters angeordnet werden, so dass der Melker das Euter und die Anzeige bzw. Bedieneinrichtung mit einem Blick erfasst. Egal ob auf der rechten oder linken Melkplatzseite.

In bevorzugten Ausgestaltungen umfasst der Melkzeugzylinder wenigstens eine Schnellbelüftung, welche über eine Membran steuerbar ist. Die Membran ist wenigstens in eine Öffnungsstellung und wenigstens in eine Verschlussstellung bringbar. Vorzugsweise umfasst die Schnellbelüftung wenigstens eine Belüftungsöffnung, die derart bemessen und angeordnet ist, dass eine schnelle Belüftung des Melkzeugzylinders möglich ist. Vorzugsweise ist die Belüftungs-wirkung durch die Schnellbelüftung erheblich und besonders bevorzugt wenigstens 50 % schneller als dies bei herkömmlichen Belüftungen der Fall ist.

Ein derartiger Melkzeugzylinder hat viele Vorteile. Es wird eine schnelle Bewegung des Melkzeuges zu dem Euter des zu melkenden Tieres ermöglicht, ohne dass der Melker große Kräfte aufbringen muss. Durch den erheblichen Luftzustrom durch die Schnellbelüftung kann das Melkzeug schnell und ohne großen Krafteinsatz bewegt werden; der Kolben des Melkzeugzylinders lässt sich erheblich einfacher aus dem Zylinder herausziehen. Im Stand der Technik hingegen ist für ein schnelles Bewegen des Melkzeuges ein erheblicher Kraftaufwand erforderlich, da die Reibungswiderstände der einströmenden Luft überwunden werden müssen. Durch die Schnellbelüftung gemäß der Erfindung werden diese Nachteile weitgehend vermieden.

In einer bevorzugten Weiterbildung wird Luft mit Überdruck zur Schnellbelüftung zugeführt. Mit geeigneter Abstimmung der Komponenten kann das Melkzeug im Prinzip kraftlos bewegt werden, so dass der Melker nur noch das Melkzeug führt.

Vorzugsweise umfasst die Schnellbelüftung wenigstens eine zusätzliche Belüftung mit wenigstens einer Öffnung. Dadurch wird eine erheblich schnellere Belüftung erreicht als wenn nur eine konventionelle Belüftung zur Verfügung steht.

Ein erheblicher Vorteil der vorliegenden Erfindung bezüglich Autostartfunktion und auch bezüglich Schnellbelüftungsfunktion ist die einfache Nachrüstbarkeit bestehender Anlagen. Durch Austausch einiger Bauteile können bestehende Anlagen nachgerüstet werden, wobei im Prinzip die Zylinderhülse des Melkzeugzylinders verbleiben kann, während der Kolben, das Sensorelement und dergleichen ausgetauscht werden. Eine Nachrüstung ist hier aufgrund des geringen Bauvolumens möglich.

In allen Ausgestaltungen des Melkzeugzylinders mit Schnellbelüftung wird die Schnellbelüftung vorzugsweise mittels eines Schnellbelüftungs- bzw. Vorsteuerventils am Zylinder gesteuert. Mittels eines Schnellbelüftungsventils kann über relativ kleine Steuerluftquerschnitte das Ventil gesteuert werden, wobei ein großer Luftquerschnitt zur Belüftung geöffnet wird. Vorzugsweise wird das Ventil zwangsgesteuert, wodurch ein sicheres Schalten ermöglicht wird und wodurch der Schaltpunkt nicht von den aktuellen Druckverhältnissen abhängt.

Vorzugsweise ist zur Steuerung der Membran oder der Schnellbelüftung ein Steueranschluss mit separater Steuerluft vorgesehen. Der Steueranschluss mündet vorzugsweise in ein Steuervolumen, welches vollständig abgeschlossen gegenüber dem Innenraum des Melkzylinders ist, so dass keine Strömungsverbindung zwischen beiden besteht und ein Luftaustausch zwischen Luft zum Betreiben des Melkzeugzylinders und Steuerluft für die Schnellbelüftung nicht stattfindet. Es ist vorteilhaft, wenn die Steuerluft für die Schnellbelüftung nicht zum Be- und/oder Entlüften verwendet wird, sondern nur zum Steuern von Ventilen: Es wird ein sicheres Schalten ermöglicht. Ansonsten kann in bestimmten Mittelstellungen des Ventils ein Überströmen zwischen Zuluft und Abluft auftreten. Wenn z.B. der Anschluss zum Evakuieren schon ein wenig geöffnet ist, während gleichzeitig der Anschluss für die Zuluft noch entsprechend geöffnet ist, können beide derart kurzgeschlossen sein, dass eine undefinierte Zwischenstellung auftritt, in der ein eigenständiges Öffnen oder Schließen nicht mehr erfolgt. Zur Vermeidung solcher Mittelstellungen ist deshalb ein schneller Vakuumaufbau bzw. Lufteinlass nötig, was aber insbesondere beim Vakuumaufbau nicht immer gewünscht wird.

Innerhalb des Schnellbelüftungsventils wird insbesondere die Membran eingesetzt. Es ist auch möglich, dass ein Schnellbelüftungsventil mit einer Kolbensteuerung anstelle einer Membransteuerung eingesetzt wird. Dazu wird der Kolben in einer Aufnahme geführt. Wenn der Kolben sich in einer ersten (End-) Stellung befindet, ist die Schnellbelüftung z.B. in Betrieb und in einer zweiten (End-) Stellung ist die Schnellbelüftung blockiert. Der Kolben kann durch Steuerluft mit atmosphärischem Druck in die erste Stellung bringbar sein und durch Vakuum auf der Steuerseite in die zweite Stellung bringbar sein. Die Abmessungen von Kolben und Aufnahme sind vorzugsweise derart gewählt, dass die Leckageverluste gering und die Reibungsverluste beim Bewegen des Kolbens gering sind, wobei die Flächen so ausgelegt sind, dass die auf den Kolben wirkenden Kräfte für den Auslegungsfall ausreichend sind.

Nachteilig an einem Schnellbelüftungsventil mit Kolbensteuerung ist, dass durch Verschmutzung bedingt sich die Reibung des Kolbens in der Aufnahme enorm erhöhen kann, bis eine Steuerung nicht mehr möglich ist. Ein weiterer Nachteil ist, dass der Schaltpunkt von den aktuellen Druckbedingungen abhängt. Ein Vorteil einer Membran ist, dass keinerlei Luftaustausch statt findet und dass die Funktion der Membran erheblich unanfälliger gegenüber Verschmutzung ist.

Vorzugsweise ist eine Vorbelastungseinrichtung vorgesehen, welche die Membran in Richtung einer Verschlussstellung vorbelastet. Vorzugsweise ist die Membran entgegen der Kraft der Vorbelastungseinrichtung in wenigstens eine Belüftungsstellung bewegbar. In der Belüftungsstellung ist Luft durch die Schnellbelüftungsöffnung zuführbar.

Gemäß einer bevorzugten Weiterbildung ist auf der einen Seite der Membran der Innenraum des Melkzeugzylinders vorgesehen, in dem der Kolben angeordnet ist. Auf der gleichen Seite erstreckt sich vorzugsweise auch ein zweiter, ringförmiger, Innenraum, der über die Schnellbelüftungsöffnungen in Strömungsverbindung mit der Außenluft steht. Vorzugsweise erstreckt sich der zweite, ringförmige, Innenraum wenigstens teilweise radial um den Zylinderinnenraum herum. Weiterhin ist es bevorzugt, dass auf der anderen Seite der Membran der Innenraum des Schnellbelüftungsventils angeordnet ist, mit dem der Membransteueranschluss verbunden ist.

Der Membransteueranschluß ist vorzugsweise mit Luft beaufschlagbar. Zu Steuerung kann Luft mit Unterdruck oder auch Luft mit Normal- oder Überdruck eingesetzt werden. Bevorzugt wird zum Öffnen der Schnellbelüftung Luft mit Unterdruck, also ein gewisses Vakuum auf den Membransteueranschluß gegeben.

Besonders bevorzugt ist, dass die Membran durch den atmosphärischen Druck in dem zweiten ringförmigen Innenraum und durch Aufbringung eines Unterdruckes an dem Membransteueranschluss in die Belüftungsstellung bringbar ist.

Durch diese Weiterbildungen wird eine größere Schaltsicherheit erreicht. Ein "zufälliges" Öffnen und Schließen der Schnellbelüftung wird zuverlässig vermieden, da die Kraft der Vorbelastungseinrichtung überwunden werden muss, um die Schnellbelüftung zu aktivieren.

Grundsätzlich kann eine gegenüber dem Stand der Technik schnellere Belüftung zwar auch über größere Querschnitte der Zuführleitungen erfolgen, aber die dafür benötigten Schläuche mit größerem Querschnitt bewirken einen generell erheblich höheren Luftverbrauch und bedingen eine größere erforderliche Vakuumleistung, da die in dem Leitungssystem vorhandene Luft bei der Abnahme wieder evakuiert werden muss. Ein weiterer Nachteil mit größer werdenden Schlauchdurchmessem ist, dass die Steifheit der Schläuche zunimmt und die Montage schwieriger wird. Außerdem werden für große Leitungsquerschnitte auch größere und damit teurere Ventile benötigt, damit sich dort die Druckverluste in Grenzen halten. Solche Schaltventile haben eine entsprechend große elektrische Leistungsaufnahme, womit eine entsprechende Leistungselektronik erforderlich wird. Das alles benötigt eine Schnellbelüftung gemäß bevorzugter Weiterbildungen der Erfindung nicht. Die Herstellkosten und der Energiebedarf sind deutlich geringer.

Wenn die Belüftung über ein Ventil erfolgt, ist die Gefahr der Verschmutzung des Ventils und damit einer Funktionsstörung gegeben. Bei der Schnellbelüftung gemäß bevorzugter Weiterbildungen der Erfindung erfolgt die Belüftung nicht über ein Ventil, sondern über an der Zylinderaußenwand angeordnete Belüftungsöffnungen, denen vorzugsweise ein Filter vorgeschaltet ist.

Ein weiterer Nachteil bei großen Leitungsquerschnitten ist, dass beim Abziehen des Melkzeuges das Absaugen der Luft zu schnell erfolgt. Der Abnahmevorgang des Melkzeuges sollte vorzugsweise langsam und schonend erfolgen.

In bevorzugten Weiterbildungen kann die zusätzliche Belüftung bzw. können die Öffnungen für die zusätzliche Belüftung auch separat zuschaltbar sein bzw. es kann beim Belüften dafür gesorgt werden, dass die zusätzlichen Öffnungen nicht Luft einlassen, indem das Schnellbelüftungsventil nicht geschaltet wird. Dann gelangt nur Luft durch die konventionelle Luftzufuhr in den Melkzeugzylinder und das Melkzeug kann für bestimmte Anwendungen, wie z.B. Reinigen oder Spülen langsam abgelassen werden.

Besonders bevorzugt ist der gleichzeitige Einsatz der erfindungsgemäßen automatischen Startfunktion mit der erfindungsgemäßen Schnellbelüftung. Ohne Schnellbelüftung muss der Melker den Kolben über den gesamten Hub herausziehen, während beim konventionellen Starten über einen Schaltknopf der Kolben schon teilweise über das Gewicht des hängenden Melkzeuges herausgezogen wird. Bei gleichzeitigem Einsatz von automatischer Startfunktion und Schnellbelüftung hat der Melker das Melkzeug schon in der Hand und der Kolben gleitet automatisch aus dem Zylinder, wodurch Zeit und Kraft eingespart werden können. Dann wird der Beginn des Melkens besonders erleichtert.

Weitere Ausgestaltungen und Vorteile der vorliegenden Erfindung zeigt ein Ausführungsbeispiel, das nun mit Bezug auf die Figur erläutert wird.

Es zeigen:
- Fig. 1: den Melkbereitschaftszustand, und
- Fig. 2: den Zustand nach erfolgter Sensorbetätigung mit geöffneter Schnellbelüftung.

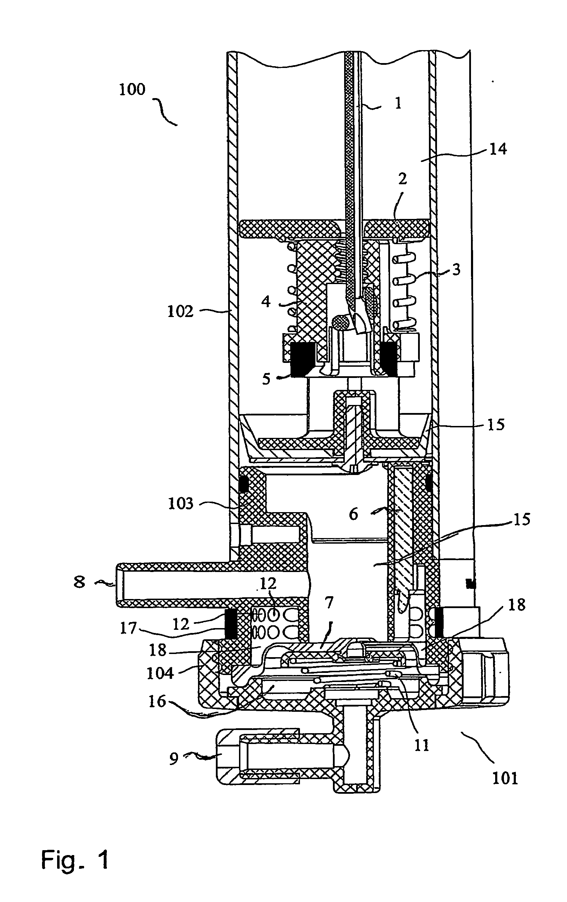

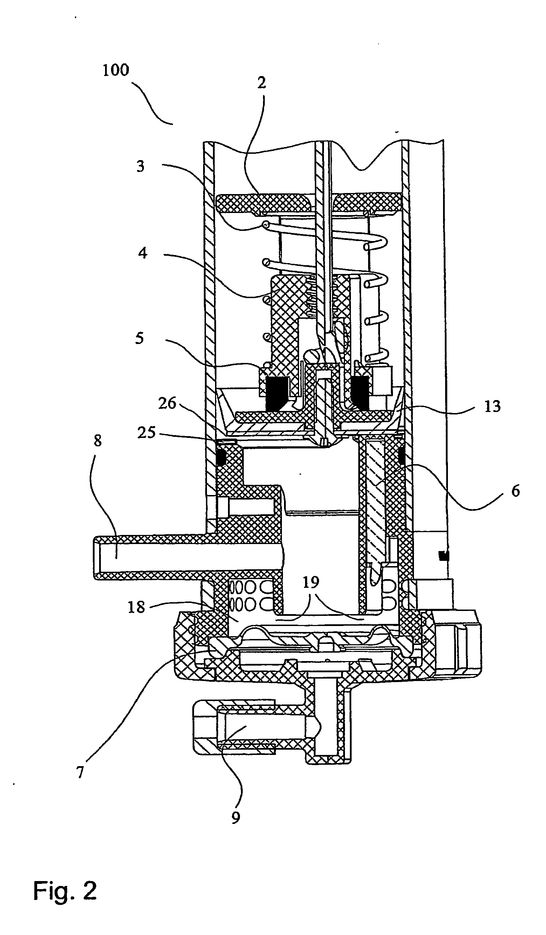

In Figuren 1 und 2 ist ein Melkzeugzylinder 100 im Schnitt dargestellt, der im Ausführungsbeispiel als Abnahmezylinder 100 bzw. als ACR-Zylinder (automatic cluster removement) ausgeführt ist und eine Zylinderhülse 102, einen in der Zylinderhülse geführten Kolben 2, ein Deckelelement 103 und ein Schnellbelüftungsventil 104 umfasst.

In Figur 1 ist der Grundzustand dargestellt, bei dem sich der Melkzeugzylinder 100 in dem Melkbereitschaftszustand befindet, während in Figur 2 der Zustand nach erfolgter Sensorbetätigung mit geöffneter Schnellbelüftung dargestellt ist

In dem Abnahmezylinder 100 ist an dem Kolben 2 ein flexibles Element 1 befestigt Das flexible Element 1 ist im Ausführungsbeispiel ein Seil 1. Das Seil 1 führt aus dem Zylinder 100 heraus zu dem Melkzeug (nicht dargestellt), welches frei beweglich an dem Seil 1 hängt. Das Seil kann über eine oder mehrere Umlenkrollen umgelenkt werden, so dass der Melkzeugzylinder 100 für unterschiedliche vertikale und horizontale Einbaulagen geeignet ist.

Eine Topfmanschette 13 an dem Kolben 2 dichtet den Zylinderinnenraum 15 gegenüber dem Außenraum 14 zuverlässig ab. Der Zylinderinnenraum 15 steht je nach Betriebszustand unter z.B. atmosphärischem Druck oder unter Vakuum.

In dem in Fig. 2 dargestellten Zustand ist das Melkzeug angehoben worden, wodurch das Seil 1 entlastet wird. Durch die Federkraft der Feder 3 bedingt, wird die Innenhülse 4 in Richtung des Endes 101 bzw. in Richtung des Deckelelements 103 des Zylinders 100 verschoben. Die Innenhülse 4 ist fest mit dem Seil 1 verbunden. Dadurch wird der Magnet 5 auf das Sensorelement 6 zu bewegt, welches im Ausführungsbeispiel als Näherungsschalter, z.B. als Reed-Kontaktschalter oder Magnetgrenzschalter 6 ausgeführt ist, und der Magnet 5 gerät in den Schaltbereich des Magnetgrenzschalters 6, der an dem Ende 101 in dem Abnahmezylinder 100 angeordnet ist. Der Magnet 5 ist wiederum an der Innenhülse 4, die ein Ende des Seils 1 festhält, befestigt. Durch die räumliche Nähe des Magneten 5 zu dem Magnetgrenzschalter 6 wird dieser ausgelöst. Das Startsignal für den Melkvorgang wird gegeben. Der Magnet 5 ist im Außenraum 14 unter Normaldruck angeordnet, während der Magnetgrenzschalter 6 im Zylinderinnenraum 15 angeordnet ist.

Das Sensorelement 6 ist räumlich feststehend angeordnet. Es findet nur eine Bewegung des Magneten 5 statt und nicht des Magnetgrenzschalters 6, so dass hier eine aufwändige Kabelführung zu einem bewegten Sensor vermieden wird.

Anstelle des Magnetgrenzschalters könnte ein Hallsensor oder dergleichen eingesetzt werden. Ebenso ist der Einsatz eines Gewichtsensors möglich, wie z.B. eines Dehnungsmessstreifens oder eines Piezosensors, der die Belastung des Seils 1 oder der Hülse 4 oder den Druck auf das Deckelelement 104 oder anderer Bauteile erfasst. Der Sensor könnte auch als Kraftmessdose zwisch en Kolben und Deckelelement oder Zylinderdeckelboden bzw. zwischen Kolben und Seil oder dergleichen vorgesehen sein.

Wird das Melkzeug angehoben oder auch nur gehalten, so kann ein entsprechender Sensor 6 ein Signal an das Steuergerät (nicht dargestellt) ausgeben. Dieses gibt atmosphärischen Druck (in besonderen Ausführungen kann auch Überdruck möglich sein) auf den Vakuumanschluss 8. Gleichzeitig kann ein gewisses Vakuum auf den Membransteueranschluss 9 bzw. den Vakuumanschluss 9 aufgebracht werden.

Es ist möglich, einen Sensor 6 vorzusehen, der auf eine Gewichtsentlastung des Melkzeuges bzw. eine Kraftentlastung des Seiles anspricht, ohne dass das Melkzeug oder das Seil bewegt werden müssen. Das kann z.B. über Kraftmesssensoren erfolgen. Es ist ebenso möglich, dass z.B. geringe Bewegungen des Seiles bzw. des Melkzeuges erfasst werden und daraufhin das Startsignal gegeben wird.

Unterschiedliche Kraftverhältnisse durch unterschiedliche Melkzeuggewichte können durch Austausch der Federn oder softwaretechnisch in der Steuereinheit abgeglichen werden, wenn z.B. Dehnungsmessstreifen, Kraftmessdosen, Piezoelektrische Elemente oder dergleichen eingesetzt werden.

Nach dem Startsignal strömt durch den Vakuumanschluss 8 (atmosphärische) Luft in den Innenraum des Zylinders zwischen Kolben und Deckel ein. Dadurch wird der Kolben mit dem Seil freigegeben, so dass das Melkzeug zu dem Tier bewegt werden kann. Durch Querschnittsverengungen und dergleichen bedingt, treten Druckverluste im Melkzeugzylinder auf. Das Melkzeug kann deshalb bei gegebener Zugkraft nur mit einer begrenzten Geschwindigkeit gezogen werden, um das Melkzeug zum Tier zu bewegen. Um das Melkzeug schneller zu bewegen, muss eine entsprechend große Kraft aufgebracht werden, die auf Dauer ermüdend ist.

Zum Vereinfachen des Startvorgangs ist deshalb, gemäß einem weiteren Vorschlag der vorliegenden Erfindung, in diesem Ausführungsbeispiel am unteren Ende 101 des Zylinders eine Schnell- oder Zusatzbelüftung mit einem Schnellbelüftungsventils 104 vorgesehen, die mit oder nach dem Startsignal aktiviert wird.

Vor dem Startsignal ist die Membran 7 des Schnellbelüftungsventils 104 durch die Vorbelastungsfeder 11 vorbelastet, so dass der Spalt 19 durch die Membran 7 verschlossen ist, wie es in Figur 1 dargestellt ist. Dem Spalt 19 wird die Luft über Belüftungsöffnungen 12, die hinter einem Filterelement 10 vorgesehen sind, zugeführt. Für die Vorbelastungsfeder kann auch ein Vorbelastungsgewicht eingesetzt werden. Es kann auch die Vorspannung der Membran zur Vorbelastung genutzt werden, so dass die Membran 7 gleichzeitig Vorbelastungseinrichtung ist.

In der Regel wird beim Start des Melkvorgangs das Melkvakuum über ein Ventil zum Melkzeug freigeschaltet. Die Steuerluft bzw. das Steuervakuum zur Steuerung dieses Ventils wird vorzugsweise auf den Vakuumanschluss 9 bzw. den Membransteueranschluss 9 gegeben. Dadurch ist kein zusätzliches Steuerventil erforderlich. Im Innenraum 16 des Steuerventils herrscht dann Unterdruck. Deshalb steht das Vakuum für den Membransteueranschluss 9 nach dem Startsignal in der Melkanlage zur Verfügung. Das liegt daran, dass mit dem Startsignal auch Vakuum auf das Melkzeug gegeben wird. Das Steuersignal für die Freischaltung des Vakuums des Melkzeugs kann mit geringem Aufwand auch zu dem Vakuumsteueranschluss 9 des Melkzeugzylinders geleitet werden. Deshalb wird zur Implementierung kein zusätzliches schaltbares Ventil benötigt. Wenn der Melkvorgang (automatisch) gestartet wird, wird das Vakuum für das Melkzeug eingeschaltet und Vakuum auf den Membransteueranschluss 9 gegeben. So ergibt sich ein besonders einfacher Aufbau.

Gleichzeitig wird Luft mit Normaldruck (atmosphärische Luft) auf den Vakuumanschluss 8 gegeben. Dadurch wird Luft mit atmosphärischem Druck durch den Vakuumanschluss 8 in den Zylinderinnenraum 15 geleitet.

Durch die Druckdifferenz zwischen dem Ringraum 18 (atmosphärischer Druck) auf der einen Seite der Membran 7 und dem im Steuerventilinnenraum 16 auf der anderen Seite der Membran vorherrschenden Unterdruck, wird die Kraft der Vorbelastungseinrichtung bzw. der Vorbelastungsfeder 11 überwunden. Die Membran 11 bewegt sich in Richtung des Endes 101 des Abnahmezylinders gegen die Kraft der Vorbelastungsfeder 11 und gibt den Spalt 19 frei, so dass die Luft von außen durch den Filter 17 über die Schnellbelüftungsöffnungen 12 in den Zylinderinnenraum 15 einströmen kann. Das ist der in Fig. 2 gezeigte Zustand.

Hier im Ausführungsbeispiel sind die Belüftungsöffnungen 12 der Schnellbelüftung radial angeordnet. Die atmosphärische Luft strömt erheblich schneller ein, als wenn die Luft nur durch den Vakuumanschluss 8 einströmt. Das liegt neben der großen Querschnittsfläche aller Belüftungsöffnungen 12 auch daran, dass in der Schnellbelüftung die einströmende Luft nur geringen Strömungsverlusten durch z.B. Luftumlenkungen und Querschnittsverengungen ausgesetzt ist

Dadurch wird der Strömungswiderstand der Schläuche, Ventile etc. zu dem Vakuumanschluss 8 nicht mehr relevant, weil die Belüftungsöffnungen 12 der Schnellbelüftung 12 genügend Luft einlassen.

Durch die durch die Belüftungsöffnungen 12 eintretende erhebliche Menge an atmosphärischer Luft, wird die mögliche Bewegungsgeschwindigkeit des Seils 1 und somit des Melkzeuges erheblich vergrößert Gleichzeitig kann mit einem deutlich verringerten Kraftaufwand das Seil aus dem Zylinder gezogen werden und dabei das Melkzeug zu dem Tier bewegt hin werden. Der Kolben 2 kann leichtgängig aus dem Melkzeugzylinder gezogen werden.

Die Realisierung einer Sonderstartfunktion ist mit der erfindungsgemäßen Vorrichtung auch möglich. Das kann z.B. erzielt werden, indem das Melkzeug vom Melker während einer vorgegebenen Zeitspanne gehalten wird, ohne es wesentlich zu bewegen. Dann kann ein Sonderprogramm gestartet werden. Beim Halten mit einer kurzen Zeitspanne wird z.B. die Stimulation gestartet und beim Halten während einer längeren Zeitspanne der normale Melkprozess. Die Zeitspanne kann z.B. 0,25 Sekunden oder 0,5 Sekunden oder 1 Sekunde oder 2 Sekunden betragen. Es kann auch eine dritte Sonderstartfunktion implementiert werden, die z.B. nach einer längeren Zeitspanne oder durch mehrmaliges Anheben des Melkzeuges bestimmte Sonderfunktionen startet. Eine mögliche Sonderfunktion ist z.B., dass nach einer längeren Haltephase ein Stoppsignal ausgegeben wird, um die Anlage nicht unnötig laufen zu lassen, wenn das Melkzeug z.B. aufgehängt wird und deshalb keine Gewichtskraft ausübt.

In einem anderen Ausführungsbeispiel, wie es in Figur 2 angedeutet ist, kann anstatt des oder zusätzlich zu dem Magnetgrenzschalter 6 ein z.B. als Drucksensor 25 ausgeführter Sensor vorgesehen sein, der z.B. einen Dehnungsmessstreifen, eine Kraftmessdose oder ein piezoelektrisches Element umfasst. Bei dieser Ausgestaltung muss kein Federelement 3 und keine Innenhülse 4 vorhanden sein, sondern das flexible Element bzw. Seil 1 kann direkt am Kolben 2 befestigt sein. Außer dem Kolben 2 mit dem Seil 1 muss kein Teil für die Startfunktion bewegbar sein, da der Sensor 25 die Kraft erfasst, mit der der Kolben 2 gegen die Oberfläche 26 des Deckelements 103 drückt. Wenn der Benutzer das Melkzeug nimmt und hält, wird die Anpresskraft des Kolbens 2 größer, da die Gewichtskraft des Melkzeugs die Kraft des Vakuums nicht mehr mindert Das Startsignal wird ausgegeben, wenn das Signal eine bestimmte Schwelle unter- oder überschreitet. Bei dieser Ausführung ist eine Selbstregulierung auf unterschiedliche Melkzeuggewichte möglich, da der Druck oder die Kraft fortwährend erfasst wird. Durch Differenzbildung der Werte im Melkbereitschaftszustand und bei angehobenen Melkzeugen kann die Schaltschwelle selbsttätig justiert werden.

## Patentansprüche

1. Melkzeugzylinder (100) mit einem flexiblen Element (1) und wenigstens einem Sensorelement (6), wobei das Sensorelement (6) wenigstens eine wesentliche Gewichtsentlastung des flexiblen Elements (1) erfasst, um ein Startsignal für einen Melkvorgang auszulösen,
**dadurch gekennzeichnet,**
**dass** wenigstens ein Schnellbelüftungsventil (104) vorgesehen ist, welches wenigstens in eine Öffnungsstellung und in eine Verschlussstellung bringbar ist.

2. Melkzeugzylinder (100) nach Anspruch 1, **dadurch gekennzeichnet, dass** ein Startsignal ausgegeben wird, wenn die Gewichtsentlastung des flexiblen Elements (1) einen vorbestimmten Schwellwert überschreitet.

3. Melkzeugzylinder (100) nach Anspruch 1 oder 2, **dadurch gekennzeichnet, dass** der vorbestimmte Schwellwert veränderbar ist.

4. Melkzeugzylinder (100) nach mindestens einem der vorhergehenden Ansprüche, **dadurch gekennzeichnet, dass** der vorbestimmte Schwellwert unabhängig von einem Betriebsvakuum ist.

5. Melkzeugzylinder (100) nach mindestens einem der vorhergehenden Ansprüche, **dadurch gekennzeichnet, dass** wenigstens ein Vorbelastungselement vorgesehen ist.

6. Melkzeugzylinder (100) nach mindestens einem der vorhergehenden Ansprüche, **dadurch gekennzeichnet, dass** der vorbestimmte Schwellwert durch das Vorbelastungselement beeinflusst wird.

7. Melkzeugzylinder (100) nach mindestens einem der vorhergehenden Ansprüche, **dadurch gekennzeichnet, dass** das flexible Element (1) mit einem beweglichen Element, z.B. einer Hülse (4) oder einem Kolben (2) verbunden ist.

8. Melkzeugzylinder (100) nach mindestens einem der vorhergehenden Ansprüche, **dadurch gekennzeichnet, dass** das flexible Element (1) als Kette oder Seil (1) ausgeführt ist.

9. Melkzeugzylinder (100) nach mindestens einem der vorhergehenden Ansprüche, **dadurch gekennzeichnet, dass** das flexible Element (1) mit dem Melkzeug verbunden ist.

10. Melkzeugzylinder (100) nach mindestens einem der vorhergehenden Ansprüche, bei dem wenigstens ein Sensorelement (6) einer Gruppe von Sensoren entnommen ist, welche Kraftmesseinrichtungen, Näherungsschalter, Magnetgrenzschalter, Reedkontaktschalter, Dehnungsmessstreifen, magnetische, induktive, kapazitive Sensoren und Widerstandssensoren und dergleichen mehr umfasst.

11. Melkzeugzylinder (100) nach mindestens einem der vorhergehenden Ansprüche, bei dem wenigstens ein Teil des Sensorelements (6) innerhalb des Zylinders angeordnet ist.

12. Melkzeugzylinder (100) nach mindestens einem der vorhergehenden Ansprüche, bei dem das Sensorelement (6) berührungslos arbeitet.

13. Melkzeugzylinder (100) nach mindestens einem der vorhergehenden Ansprüche, **dadurch gekennzeichnet, dass** wenigstens eine Schnellbelüftung (12) vorgesehen ist, welche über eine Membran (7) steuerbar ist, wobei die Membran (7) wenigstens in eine Öffnungsstellung und in eine Verschlussstellung bringbar ist.

14. Melkzeugzylinder nach Anspruch 13, **dadurch gekennzeichnet,**
**dass** zur Steuerung der Schnellbelüftung (12) ein Steueranschluss (9) mit separater Steuerluft vorgesehen ist.

15. Melkzeugzylinder (100) nach Anspruch 13 oder 14, **dadurch gekennzeichnet, dass** zur Steuerung der Membran (7) ein Steueranschluss (9) mit separater Steuerluft vorgesehen ist.

16. Melkzeugzylinder (100) nach Anspruch 13, 14 oder 15, **dadurch gekennzeichnet, dass** die Schnellbelüftung (12) mittels des Schnellbelüftungsventils (104) gesteuert wird.

17. Melkzeugzylinder (100) nach mindestens einem der Ansprüche 13 bis 16, **dadurch gekennzeichnet, dass** eine Vorbelastungseinrichtung vorgesehen ist, welche die Membran (7) in Richtung der Verschlussstellung vorbelastet.

18. Melkzeugzylinder (100) nach mindestens einem der Ansprüche 13 bis 16, **dadurch gekennzeichnet, dass** die Membran (7) in eine Belüftungsstellung bewegbar ist, in welcher durch wenigstens eine Schnellbelüftungsöffnung (12) Luft zuführbar ist.

19. Melkzeugzylinder (100) nach mindestens einem der Ansprüche 13 bis 18, **dadurch gekennzeichnet, dass** auf der einen Seite der Membran (7) ein Innenraum (15) des Melkzeugzylinders vorgesehen ist, in dem ein Kolben (2) angeordnet ist.

20. Melkzeugzylinder (100) nach mindestens einem der Ansprüche 13 bis 19, **dadurch gekennzeichnet, dass** auf der anderen Seite der Membran (7) ein Membransteueranschluß (9) angeordnet ist.

21. Melkzeugzylinder (100) nach mindestens einem der Ansprüche 13 bis 20, **dadurch gekennzeichnet, dass** die Membran (7) durch Aufbringung von atmosphärischen Druck in dem Innenraum (15) und durch Aufbringung eines Unterdruckes an dem Membransteueranschluß (9) in die Belüftungsstellung bringbar ist.

22. Verfahren zum automatischen Starten eines Melkvorgangs unter Verwendung eines Melkzeuges mit einem Melkzeugzylinder (100) und einem flexiblen Element (1) und einem Sensorelement (6) und wenigstens einem Schnellbelüftungsventil (104), wobei mit dem Sensorelement (6) wenigstens eine wesentliche Gewichtsentlastung des flexiblen Elements (1) erfasst und ein Startsignal für einen Melkvorgang erzeugt wird und eine schnelle Belüftung des Melkzeugzylinders erfolgt.

23. Verfahren nach Anspruch 22, wobei durch Anheben eines Melkzeuges ein Startsignal erzeugt wird.

24. Verfahren nach Anspruch 22 oder 23, wobei eine schnelle Belüftung durch zusätzliche Belüftungsöffnungen erfolgt.

25. Verfahren nach Anspruch 22, 23 oder 24 unter Verwendung einer Vorrichtung gemäß mindestens einem der Ansprüche 1 bis 21.

26. Verfahren nach Anspruch 25, wobei eine Schnellbelüftung eines Melkzeugzylinders erfolgt, wozu eine Luftzufuhr durch eine Membran (7) freigegeben wird.

## Claims

1. A milking unit cylinder (100) comprising a flexible member (1) and at least one sensing element (6), wherein the sensing element (6) detects at least a substantial weight relief of the flexible member (1) to trigger a start signal for a milking process, **characterized in that** at least one rapid ventilation valve (104) is provided which can be brought at least to an open position and a closed position.

2. The milking unit cylinder (100) according to claim 1, **characterized in that** a start signal is emitted as the weight relief of the flexible member (1) exceeds a predetermined threshold value.

3. The milking unit cylinder (100) according to claim 1 or 2,
**characterized in that** the predetermined threshold value is variable.

4. The milking unit cylinder (100) according to at least one of the preceding claims, **characterized in that** the predetermined threshold value is independent of an operating vacuum.

5. The milking unit cylinder (100) according to at least one of the preceding claims, **characterized in that** at least one biasing member is provided.

6. The milking unit cylinder (100) according to at least one of the preceding claims, **characterized in that** the predetermined threshold value is influenced by the biasing member.

7. The milking unit cylinder (100) according to at least one of the preceding claims, **characterized in that** the flexible member (1) is connected with a movable member such as a sleeve (4) or a piston (2).

8. The milking unit cylinder (100) according to at least one of the preceding claims, **characterized in that** the flexible member (1) is configured as a chain or a rope (1).

9. The milking unit cylinder (100) according to at least one of the preceding claims, **characterized in that** the flexible member (1) is connected with the milking unit.

10. The milking unit cylinder (100) according to at least one of the preceding claims wherein at least one sensing element (6) is selected from a group of sensors comprising load measuring means, proximity switches, magnetic limiting switches, dry reed contact switches, expansion measuring strips, magnetic, inductive, capacitive sensors and resistance sensors and the like.

11. The milking unit cylinder (100) according to at least one of the preceding claims wherein at least a portion of the sensing element (6) is mounted within the cylinder.

12. The milking unit cylinder (100) according to at least one of the preceding claims wherein the sensing element (6) works contactless.

13. The milking unit cylinder (100) according to at least one of the preceding claims, **characterized in that** at least one rapid ventilation (12) is provided that is controlled through a membrane (7) which membrane (7) can be brought at least to an open position and a closed position.

14. The milking unit cylinder according to claim 13, **characterized in that** for controlling the rapid ventilation (12), a control port (9) with separate control air is provided.

15. The milking unit cylinder (100) according to claim 13 or 14, **characterized in that** for controlling the membrane (7), a control port (9) with separate control air is provided.

16. The milking unit cylinder (100) according to claim 13, 14 or 15, **characterized in that** the rapid ventilation (12) is controlled by means of the rapid ventilation valve (104).

17. The milking unit cylinder (100) according to at least one of claims 13 to 16, **characterized in that** a biasing means is provided that biases the membrane (7) in the direction of the closed position.

18. The milking unit cylinder (100) according to at least one of claims 13 to 16, **characterized in that** the membrane (7) can be moved to a ventilation position where air can be supplied through at least one rapid ventilation aperture (12).

19. The milking unit cylinder (100) according to at least one of claims 13 to 18, **characterized in that** on one side of the membrane (7) an interior space (15) of the milking unit cylinder is provided in which a piston (2) is mounted.

20. The milking unit cylinder (100) according to at least one of claims 13 to 19, **characterized in that** on the other side of the membrane (7) a membrane control port (9) is mounted.

21. The milking unit cylinder (100) according to at least one of claims 13 to 20, **characterized in that** the membrane (7) can be brought to the ventilation position by applying atmospheric pressure in the interior space (15) and by applying subpressure on the membrane control port (9).

22. Method for automatically starting a milking process employing a milking unit having a milking unit cylinder (100) and a flexible member (1) and a sensing element (6) and at least one rapid ventilation valve (104), wherein by way of the sensing element (6) at least a substantial weight relief of the flexible member (1) is detected and a start signal for a milking operation is generated and rapid ventilation of the milking unit cylinder is carried out.

23. The method according to claim 22, wherein lifting a milking unit triggers a start signal.

24. The method according to claim 22 or 23, wherein rapid ventilation occurs through additional ventilation apertures.

25. The method according to claim 22, 23 or 24 including employing an apparatus according to at least one of the claims 1 to 21.

26. The method according to claim 25 wherein rapid ventilation of a milking unit cylinder occurs by way of enabling air supply through a membrane (7).

## Revendications

1. Cylindre de faisceau trayeur (100) comprenant un élément flexible (1) et au moins un élément capteur (6), dans lequel ledit élément capteur (6) détecte au moins une décharge de poids essentielle de l'élément flexible (1) afin de déclencher un signal de départ pour une opération de traite, **caractérisé par le fait qu'**au moins une valve d'aération rapide (104) est prévue qui peut être mise au moins dans une position d'ouverture et une position de fermeture.

2. Cylindre de faisceau trayeur (100) selon la revendication 1, **caractérisé par le fait qu'**un signal de départ est délivré lorsque la décharge de poids de l'élément flexible (1) dépasse une valeur de seuil prédéterminée.

3. Cylindre de faisceau trayeur (100) selon la revendication 1 ou 2, **caractérisé par le fait que** la valeur de seuil prédéterminée est modifiable.

4. Cylindre de faisceau trayeur (100) selon l'une au moins des revendications précédentes, **caractérisé par le fait que** la valeur de seuil prédéterminée est indépendante d'un vide de fonctionnement.

5. Cylindre de faisceau trayeur (100) selon l'une au moins des revendications précédentes, **caractérisé par le fait qu'**au moins un élément de précontrainte est prévu.

6. Cylindre de faisceau trayeur (100) selon l'une au moins des revendications précédentes, **caractérisé par le fait que** la valeur de seuil prédéterminée est influencée par ledit élément de précontrainte.

7. Cylindre de faisceau trayeur (100) selon l'une au moins des revendications précédentes, **caractérisé par le fait que** ledit élément flexible (1) est relié à un élément mobil, tel qu'une douille (4) ou un piston (2).

8. Cylindre de faisceau trayeur (100) selon l'une au moins des revendications précédentes, **caractérisé par le fait que** ledit élément flexible (1) est réalisé en tant que chaîne ou câble (1).

9. Cylindre de faisceau trayeur (100) selon l'une au moins des revendications précédentes, **caractérisé par le fait que** ledit élément flexible (1) est relié au faisceau trayeur.

10. Cylindre de faisceau trayeur (100) selon l'une au moins des revendications précédentes, dans lequel au moins un élément capteur (6) est pris dans un groupe de capteurs qui comprend des capteurs de force, des détecteurs de proximité, des interrupteurs magnétiques de fin de course, des interrupteurs reed, des jauges extensométriques, des capteurs magnétiques, inductifs, capacitifs et capteurs de résistance ainsi que d'autres choses semblables.

11. Cylindre de faisceau trayeur (100) selon l'une au moins des revendications précédentes, dans lequel au moins une partie de l'élément capteur (6) est disposée à l'intérieur du cylindre.

12. Cylindre de faisceau trayeur (100) selon l'une au moins des revendications précédentes, dans lequel ledit élément capteur (6) travaille sans contact.

13. Cylindre de faisceau trayeur (100) selon l'une au moins des revendications précédentes, **caractérisé par le fait qu'**au moins une aération rapide (12) est prévue qui peut être commandée par une membrane (7), la membrane (7) pouvant être mise au moins dans une position d'ouverture et dans une position de fermeture.

14. Cylindre de faisceau trayeur selon la revendication 13, **caractérisé par le fait qu'**un raccord de commande (9) à air de commande séparé est prévu pour commander l'aération rapide (12).

15. Cylindre de faisceau trayeur (100) selon la revendication 13 ou 14, **caractérisé par le fait qu'**un raccord de commande (9) à air de commande séparé est prévu pour commander la membrane (7).

16. Cylindre de faisceau trayeur (100) selon la revendication 13, 14 ou 15, **caractérisé par le fait que** l'aération rapide (12) est commandée au moyen de ladite valve d'aération rapide (104).

17. Cylindre de faisceau trayeur (100) selon l'une au moins des revendications 13 à 16, **caractérisé par le fait qu'**un dispositif de précontrainte est prévu qui précontraint la membrane (7) en direction de la position de fermeture.

18. Cylindre de faisceau trayeur (100) selon l'une au moins des revendications 13 à 16, **caractérisé par le fait que** ladite membrane (7) est déplaçable dans une position d'aération dans laquelle de l'air peut être amené par au moins une ouverture d'aération rapide (12).

19. Cylindre de faisceau trayeur (100) selon l'une au moins des revendications 13 à 18, **caractérisé par le fait qu'**un espace intérieur (15) du cylindre de faisceau trayeur, dans lequel est disposé un piston (2), est prévu de l'un des côtés de la membrane (7).

20. Cylindre de faisceau trayeur (100) selon l'une au moins des revendications 13 à 19, **caractérisé par le fait qu'**un raccord de commande de membrane (9) est disposé de l'autre côté de la membrane (7).

21. Cylindre de faisceau trayeur (100) selon l'une au moins des revendications 13 à 20, **caractérisé par le fait que** ladite membrane (7) peut être déplacée dans la position d'aération en appliquant une pression atmosphérique dans ledit espace intérieur (15) et en appliquant une dépression au raccord de commande de membrane (9).

22. Procédé de démarrage automatique d'une opération de traite en utilisant un faisceau trayeur comprenant un cylindre de faisceau trayeur (100) et un élément flexible (1) et un élément capteur (6) ainsi qu'au moins une valve d'aération rapide (104), dans lequel au moins une décharge de poids essentielle de l'élément flexible (1) est détectée par ledit élément capteur (6) et un signal de départ pour une opération de traite est généré et une aération rapide du cylindre de faisceau trayeur a lieu.

23. Procédé selon la revendication 22, dans lequel un signal de départ est généré en soulevant un faisceau trayeur.

24. Procédé selon la revendication 22 ou 23, dans lequel une aération rapide se fait par des orifices d'aération supplémentaires.

25. Procédé selon la revendication 22, 23 ou 24, en utilisant un dispositif selon l'une au moins des revendications 1 à 21.

26. Procédé selon la revendication 25, dans lequel une aération rapide d'un cylindre de faisceau trayeur a lieu, ce pour quoi une entrée d'air est libérée par une membrane (7).
